# FASCICULE DE BREVET EUROPEEN

(11) **EP 1 137 560 B1**
(45) Date de publication et mention de la délivrance du brevet: **18.06.2003**
(21) Numéro de dépôt: 99957376.9
(22) Date de dépôt: 09.12.1999
(51) Int. Cl.: B60T 7/06

(54) **DISPOSITIF DE LIAISON MECANIQUE DEVERROUILLABLE PYROTECHNIQUEMENT**
PYROTECHNISCH ENTRIEGELBARE MECHANISCHE VERBINDUNGSVORRICHTUNG
MECHANICAL LINKAGE DEVICE CAPABLE OF BEING PYROTECHNICALLY RELEASED

(30) Priorité: 09.12.1998 FR 9815637
(43) Date de publication de la demande: 04.10.2001
(73) Titulaire: GIAT INDUSTRIES, 78000 Versailles (FR)
(72) Inventeur: VIDOT, Jean-Paul, F-65320 Bordères sur l'Echez (FR); CHEMIERE, PATRICE, 65350 Laslades (FR)
(74) Mandataire: Célanie, Christian
(86) Numéro de dépôt international: FR9903067
(87) Numéro de publication internationale: WO00034094

(56) Documents cités:
- DE-A- 4 305 049
- DE-A- 19 634 257
- DE-C- 19 617 372
- GB-A- 2 322 836

## Description

Le domaine technique de l'invention est celui des dispositifs de liaison mécanique entre un premier élément mécanique et un deuxième élément mécanique, dispositifs déverrouillables pyrotechniquement.

De tels dispositifs sont connus notamment dans le domaine des sécurités automobiles.

On connaît par exemple par le brevet DE19515852 un dispositif permettant de désolidariser pyrotechniquement deux extrémités d'une tige de commande d'un maître cylindre de frein automobile. Une telle désolidarisation intervient en cas d'accident pour éviter un choc de la pédale de frein sur les chevilles du conducteur.

Le dispositif de liaison mécanique déverrouillable décrit par ce document met en oeuvre une charge pyrotechnique disposée dans un logement aménagé sur la tige ou bien dans un manchon de raccordement entre deux éléments de la tige.

On connaît également des dispositifs de désolidarisation qui mettent en oeuvre ce que l'on appelle communément des boulons explosifs. Le brevet DE19515852 décrit également cette solution qui est employée d'une façon classique dans les dispositifs de désolidarisation utilisés sur les engins balistiques ou en aéronautique.

L'inconvénient de ces solutions est qu'elles s'appuient sur les effets brisants d'une charge pyrotechnique. On utilise en effet un ou plusieurs explosifs primaires éventuellement associés à un ou plusieurs explosifs secondaires ou à des substances énergétiques mais fortement confinées.

Or les explosifs primaires sont des matériaux sensibles qui sont donc de mise en oeuvre délicate ou dangereuse.

Afin d'assurer la rupture de pièces mécaniques de maintien, les quantités de charges pyrotechniques nécessaires sont également importantes (>100 mg), ce qui accroît encore les risques et les coûts.

Les boulons explosifs connus ou les autres systèmes brisants sont donc mal adaptés aux applications civiles notamment dans le domaine de l'automobile.

De plus les boulons connus constituent un moyen de liaison qui est inséré transversalement par rapport aux éléments à solidariser. Lors de l'initiation du boulon, des morceaux de celui ci risquent de rester engagés dans les différents éléments et ils peuvent ainsi perturber l'écartement ou la désolidarisation de ces derniers. L'effort de séparation des deux éléments est donc non reproductible et le dispositif n'est pas suffisamment fiable, sauf à utiliser une quantité d'explosif trop importante.

On connaît également par le brevet DE19617372 un autre dispositif permettant de désolidariser pyrotechniquement deux extrémités d'une tige de commande d'un maître cylindre de frein automobile.

Dans ce dispositif la tige de maître cylindre est rendue solidaire en translation de la pédale de commande au moyen d'un anneau disposé dans une gorge. Cet anneau est chassé par les efforts de traction ou de compression exercés sur la tige et il est maintenu dans sa position de verrouillage par un moyen de maintien qui est constitué par un piston poussé par un ressort.

Afin d'assurer la désolidarisation, on initie une charge pyrotechnique qui génère des gaz agissant sur le piston contre l'action du ressort.

Les gaz sont également dirigés dans une chambre où ils exercent un effort tendant à séparer les éléments à désolidariser.

Un tel dispositif présente pour premier inconvénient d'avoir une structure complexe comprenant de nombreuses pièces mobiles et notamment des ressorts dont les caractéristiques mécaniques sont susceptibles de se dégrader au cours du temps.

Cette structure est donc susceptible de se coincer, aussi elle met en oeuvre une quantité de composition pyrotechnique importante permettant notamment d'agir directement sur les éléments mécaniques à désolidariser de façon à libérer l'anneau de verrouillage.

Le générateur de gaz est de forme annulaire, il est donc compliqué à fabriquer et à intégrer.

De plus les gaz ayant pour effet d'agir directement sur les moyens de verrouillage, il en résulte une perte totale de la possibilité d'agir sur la tige de maître cylindre en cas de déclenchement inopiné du composant pyrotechnique.

En l'absence d'un contexte d'accident, le déclenchement de ce dispositif entraîne donc une perte totale de la capacité de freinage.

Le brevet DE-A-4 305 049 décrit un dispositif permettant la rétractation d'une colonne de direction à l'aide de la pression de gaz fournie par un composant pyrotechnique. Ce composant est poussé contre un percuteur par un ressort et l'initiation est réalisée après sa libération par un verrou maintenu par une couronne coulissante.

C'est le but de l'invention que de proposer un dispositif de liaison mécanique de deux éléments mécaniques qui est déverrouillable pyrotechniquement et qui ne présente pas de tels inconvénients.

Le dispositif de liaison mécanique déverrouillable pyrotechniquement selon l'invention est de structure simple, compacte et peu coûteuse. Il est de mise en oeuvre simple et permet de n'utiliser qu'une quantité réduite de composition pyrotechnique, composition qui pourra éventuellement être dépourvue d'explosif primaire. Pratiquement on pourra utiliser uniquement la masse de composition contenue dans un initiateur pyrotechnique pour systèmes de sécurités automobiles.

Un initiateur pyrotechnique standard peut par ailleurs être facilement intégré à l'intérieur du dispositif selon l'invention et cela sans modifications de sa structure.

De plus le dispositif selon l'invention est fiable et il assure une bonne reproductibilité des efforts de séparation entre les éléments mécaniques.

Ainsi l'invention a pour objet un dispositif de liaison mécanique déverrouillable pyrotechniquement entre deux éléments mécaniques susceptibles d'être soumis à des efforts de traction et/ou de compression suivant un axe, dispositif comprenant au moins un composant pyrotechnique et au moins un moyen de verrouillage assurant la liaison entre les deux éléments mécaniques suivant au moins un axe, moyen de verrouillage susceptible d'être libéré lorsque les éléments mécaniques sont soumis aux efforts de traction et/ou de compression suivant ledit axe et qui est maintenu dans sa position de verrouillage par des moyens de maintien qui sont libérés par la pression des gaz engendrés par l'initiation du composant pyrotechnique, les moyens de maintien comprenant une coiffe solidaire d'une tête portant le composant pyrotechnique ou bien formant elle-même une tête portant le composant pyrotechnique, caractérisé en ce qu'il comporte une chambre dans laquelle se développent les gaz engendrés par le composant pyrotechnique, chambre délimitée d'un côté par un fond d'un alésage de la tête et de l'autre côté par une extrémité du deuxième élément mécanique.

Selon un premier mode de réalisation, les moyens de verrouillage sont constitués par au moins deux billes qui se logent dans des trous aménagés sur un manchon tubulaire solidaire du premier des deux éléments mécaniques et qui coopèrent avec une gorge qui est solidaire du deuxième élément mécanique, billes maintenues en place par la coiffe qui est susceptible de se déplacer de façon à libérer les billes comme suite à la pression des gaz engendrés par le composant pyrotechnique.

La coiffe pourra être maintenue axialement par rapport au manchon tubulaire par un sertissage annulaire d'une extrémité de celle ci sur le manchon.

Selon un deuxième mode de réalisation, les moyens de verrouillage sont constitués par au moins deux mâchoires en appui sur le premier élément mécanique et enserrant une extrémité du deuxième élément mécanique, mâchoires présentant un profil complémentaire de celui de ladite extrémité et maintenues en place par l'intermédiaire de la coiffe.

La coiffe pourra être maintenue axialement par un sertissage annulaire d'une extrémité de celle ci sur les mâchoires.

Selon une variante de ce mode de réalisation, le profil des mâchoires pourra être un profil de taraudage destiné à coopérer avec une extrémité filetée solidaire du deuxième élément mécanique.

Les mâchoires pourront être maintenues avant fixation de la coiffe par un anneau déformable.

Avantageusement, chaque mâchoire pourra présenter un profil externe comportant au moins un plat, les mâchoires assemblées formant un écrou.

Le dispositif pourra comporter une bague entretoise entourant une extrémité du composant pyrotechnique et comportant une surface de butée pour l'extrémité filetée solidaire du deuxième élément mécanique de façon à éviter tout contact de cette dernière avec le composant pyrotechnique.

L'invention sera mieux comprise à la lecture de la description qui va suivre de modes particuliers de réalisation, description faite en référence aux dessins annexés et dans lesquels :
- la figure 1 représente en coupe longitudinale un premier mode de réalisation d'un dispositif de liaison mécanique déverrouillable selon l'invention,
- la figure 2a représente en coupe longitudinale un deuxième mode de réalisation d'un dispositif de liaison mécanique déverrouillable selon l'invention,
- la figure 2b est une coupe de la figure 2a suivant le plan dont la trace AA est repérée sur la figure 2a,
- la figure 3 représente en coupe longitudinale une variante de ce deuxième mode de réalisation d'un dispositif de liaison mécanique déverrouillable selon l'invention,
- la figure 4 est une coupe transversale de ce dispositif suivant le plan dont la trace BB est repérée sur la figure 3.

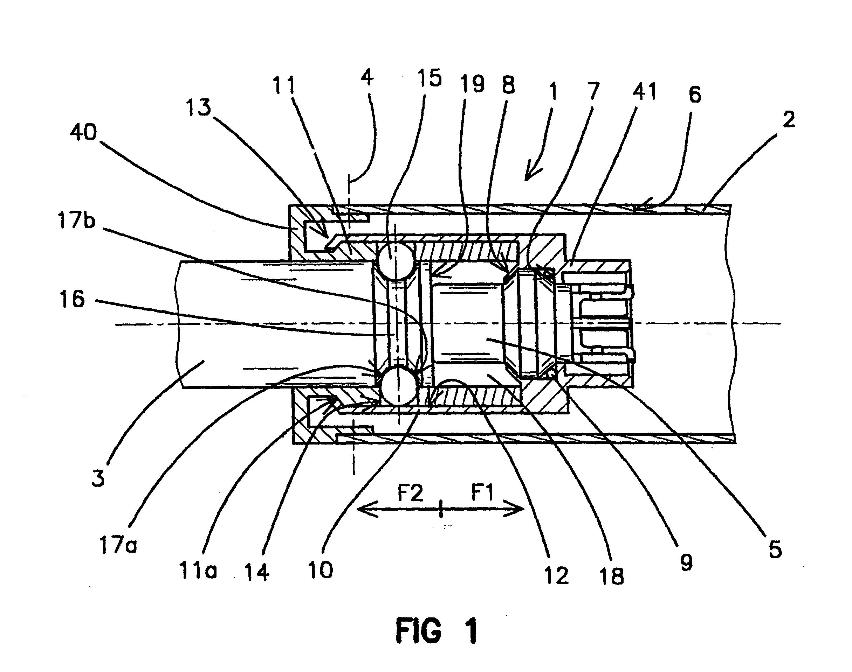

En se reportant à la figure 1, un dispositif 1 de liaison mécanique déverrouillable pyrotechniquement est disposé entre un premier élément mécanique 2 et un deuxième élément mécanique 3.

Le deuxième élément mécanique 3 est ici une tige cylindrique pleine et le premier élément mécanique est une tige creuse 2 qui est fixée sur une collerette cylindrique 40 solidaire d'un manchon 11 dont la fonction sera explicitée par la suite. La fixation de la tige 2 sur la collerette 40 pourra par exemple être assurée par des vis radiales (dont seuls deux axes 4 sont représentés ici), ou encore par filetage.

Les tiges 2 et 3 sont par exemples deux parties d'une tige de transmission d'efforts de freinage entre une pédale de frein et un maître cylindre.

Le dispositif de liaison mécanique déverrouillable selon l'invention comprend une tête 41 qui est destinée à recevoir un composant pyrotechnique 5, par exemple un inflammateur à fil chaud ou à pont semi conducteur du type de ceux décrits par les brevets EP600791 et FR2720493. Ce composant est relié par des fils non représentés à un dispositif électronique de commande du déclenchement. Les fils traverseront la tige creuse 2 par exemple au travers d'une ouverture latérale 6.

Le composant pyrotechnique 5 est fixé au moyen d'un sertissage annulaire 8 dans un lamage 7, aménagé sur la tête 41.

Des moyens d'étanchéité (par exemple un joint torique 9) sont disposés entre le composant 5 et le fond du lamage 7.

La tête 41 est réalisée par exemple en alliage léger à base de zinc et d'aluminium tel que du Zamak (marque déposée) ou en matière plastique, elle comporte un alésage cylindrique 12 qui est délimité par une coiffe mince 10.

Cet alésage cylindrique reçoit le manchon tubulaire 11 qui vient en appui contre le fond de l'alésage 12. La solidarisation axiale du manchon 11 et de la tête 41 est assurée par un sertissage annulaire 13 de la coiffe 10 sur le manchon 11 qui comportera à cet effet une portée conique 11a.

Le manchon 11 comporte au moins deux perçages 14 régulièrement répartis angulairement (ici quatre perçages dont seuls deux sont visibles). Les perçages sont destinés à recevoir des billes 15 dont le diamètre est sensiblement égal à celui des perçages.

Les billes 15 viennent également se loger dans une gorge 16 qui est aménagée sur l'extrémité du deuxième élément mécanique 3.

Cette gorge 16 est délimitée par deux profils coniques 17a, 17b.

Les billes se trouvent maintenues au fond de la gorge 16 par la surface cylindrique interne de la coiffe 10.

Les billes 15 constituent ainsi un moyen de verrouillage qui est interposé entre le premier élément mécanique 2 (par l'intermédiaire du manchon 11) et le deuxième élément mécanique 3 et qui assure la solidarisation axiale de ces éléments.

Ainsi, un effort de traction exercé par le premier élément 2 suivant la direction F1 ou bien un effort de compression exercé suivant la direction F2 est communiqué aux billes 15 par l'intermédiaire du manchon annulaire 11. Ces dernières, immobilisées dans leurs perçages 14 par la coiffe 10, transmettent l'effort de traction ou de compression au deuxième élément 3.

Du point de vue montage, on positionnera tout d'abord le manchon 11 sur l'extrémité de la tige du deuxième élément 3, on placera ensuite les billes dans leurs perçages 14 où elles seront maintenues temporairement, par exemple par de la graisse. Puis on glissera la coiffe 10 de la tête 41 (équipée du composant pyrotechnique 5) sur le manchon 11 pour immobiliser les billes 15 par rapport au deuxième élément 3.

On sertira enfin la coiffe 10 sur le manchon 11 puis on fixera le premier élément 2 sur la collerette 40 du manchon.

Après montage du dispositif, il subsiste à l'intérieur du manchon 11 une chambre 18 dans laquelle pourront se développer les gaz engendrés par le composant pyrotechnique 5.

Cette chambre est délimitée, d'un côté par le fond de l'alésage cylindrique 12 de la tête 41, et de l'autre côté par une extrémité 19 du deuxième élément mécanique 3.

Le fonctionnement de ce dispositif est le suivant.

Lorsque l'on souhaite désolidariser le premier élément 2 et le deuxième élément 3, on commande l'initiation du composant pyrotechnique 5.

Les gaz qui se développent à l'intérieur de la chambre 18 exercent une poussée sur le fond de l'alésage cylindrique 12 de la tête 41. Cette poussée provoque l'ouverture du sertissage 13. La coiffe 10 peut alors coulisser relativement au manchon 11. Lorsque la coiffe 10 ne se trouve plus en regard des billes 15, elle n'immobilise plus ces dernières dans la gorge 16.

Dans ce cas, lorsqu'un effort suivant une direction F1 ou F2 est exercé sur l'un ou l'autre des deux éléments mécaniques 2 ou 3, les profils coniques 17a et 17b de la gorge 16 ont pour effet de pousser radialement les billes 15 qui n'assurent plus la solidarisation du premier et du deuxième élément mécanique.

On voit que grâce à l'invention, le composant pyrotechnique doit être juste suffisant pour dessertir la coiffe 10.

La tenue mécanique de la liaison entre le premier et le deuxième élément mécanique est assurée par le manchon et les billes. La coiffe doit avoir une épaisseur et une résistance suffisante pour assurer le maintien des billes dans la gorge 16. Par contre le sertissage de la coiffe 10 ne participe pas à la transmission des efforts entre le premier et le deuxième élément mécanique. Il est donc possible de dimensionner le sertissage d'une façon telle qu'une pression de gaz relativement réduite assure la libération des billes.

Concrètement il suffit d'utiliser un composant pyrotechnique classique du type de ceux utilisés pour initier les générateurs de gaz permettant de gonfler les coussins de sécurité automobile. Un tel composant contient une quantité réduite de composition pyrotechnique (inférieure à 100 mg).

Il n'est pas nécessaire de prévoir une composition énergétique complémentaire et le composant pourra éventuellement mettre en oeuvre une composition pyrotechnique dépourvue d'explosif primaire.

A titre de variante il est bien entendu possible de faire varier le nombre de billes.

Il est également possible de réaliser une gorge 16 dont le profil en coupe longitudinale sera circulaire au lieu d'être délimité par des génératrices de cônes. Le diamètre du cercle sera choisi égal à celui des billes et la profondeur de la gorge sera inférieure au rayon des billes afin de permettre l'éjection des billes. Une telle disposition permettra d'accroître les surfaces de contact et permettra une transmission d'efforts plus importante en réduisant le matage. D'autres profils de gorge complémentaires avec les billes sont également possibles.

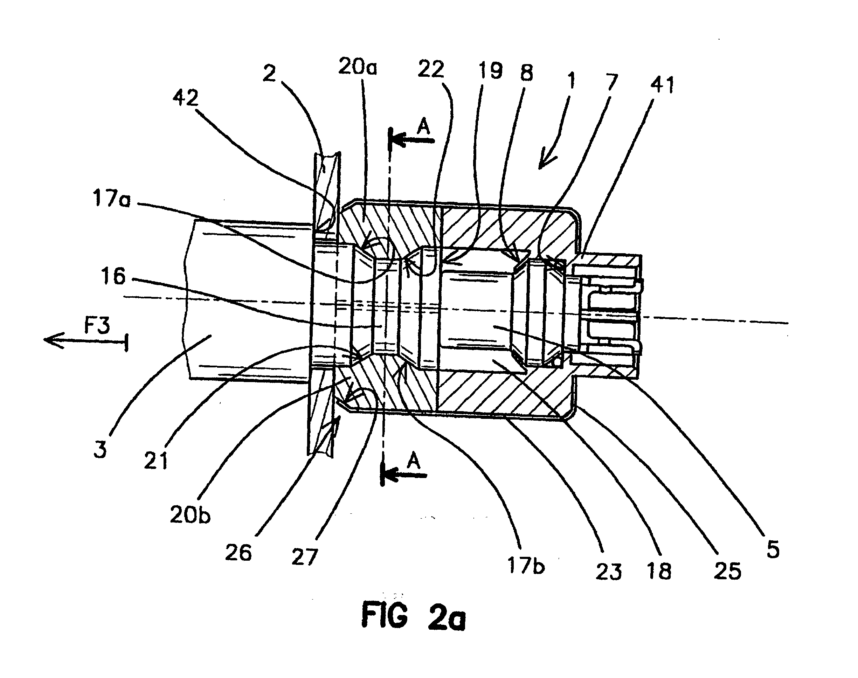

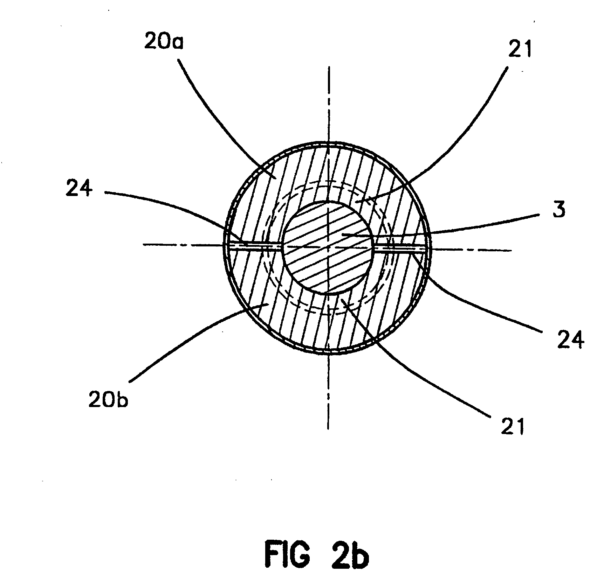

Les figures 2a et 2b montrent un deuxième mode de réalisation du dispositif de liaison mécanique déverrouillable selon l'invention.

Là encore, le deuxième élément mécanique 3 est une tige ayant une extrémité 19 et présentant une gorge 16 délimitée par deux profils coniques 17a et 17b.

Le premier élément mécanique 2 est par contre constitué ici par une plaque, appliquée sur un épaulement 42 de la tige 3, par le dispositif 1 selon l'invention.

Ce type de montage est analogue à celui d'un boulon explosif, mais il ne met en oeuvre qu'une quantité réduite de composition pyrotechnique.

A titre d'exemple pratique, le deuxième élément 3 pourra être solidaire d'une charge suspendue à la plaque 2 solidaire d'un support. La tige 3 exerce alors sur la plaque 2 un effort suivant la direction F3. On trouvera un tel montage pour la liaison d'une charge aérolarguable à un aéronef.

Le dispositif 1 selon l'invention comprend là encore une tête 41 qui reçoit comme précédemment un composant pyrotechnique 5.

Ce mode de réalisation diffère du précédent en ce que les moyens de verrouillage sont constitués par deux mâchoires 20a, 20b qui enserrent le deuxième élément mécanique 3 au niveau de la gorge 16.

Les mâchoires 20a,20b présentent un profil complémentaire de celui de l'extrémité de l'élément 3. Elles comportent donc chacune des portées coniques 21, 22 qui viennent en contact avec les profils coniques 17a, 17b respectivement.

Chaque mâchoire 20a,20b ne couvre pas complètement une demi circonférence du deuxième élément 3, il subsiste donc après montage une fente 24 entre les mâchoires (voir figure 2b).

Les deux mâchoires 20a,20b sont réalisées par exemple en acier, elles sont rendues solidaires de la tête 41 par l'intermédiaire d'une coiffe qui est ici une gaine 23 (réalisée en alliage léger à base de zinc et d'aluminium tel que du Zamak (marque déposée) ou encore en matière plastique).

Le matériau et l'épaisseur de la coiffe 23 seront choisis de façon à assurer le maintien radial des mâchoires dans la gorge 16 lorsqu'elles sont soumises à un effort de traction donné F3.

La coiffe 23 présente un épaulement 25, en appui contre une face arrière de la tête 41, et un sertissage annulaire 26 sur les mâchoires 20a, 20b. Pour permettre le sertissage, ces dernières comporteront une portée conique 27.

Le montage du dispositif est réalisé de la façon suivante:
- on positionne les mâchoires 20a,20b au niveau de la gorge 16,
- on fait glisser sur les mâchoires la coiffe 23 elle même montée sur la tête 41,
- on solidarise les deux éléments 2 et 3 en sertissant la coiffe sur les mâchoires 20a,20b.

Le fonctionnement de ce dispositif est analogue à celui du mode de réalisation précédent.

Les gaz engendrés par le composant pyrotechnique 5 se développent dans la chambre 18 qui est obturée par l'extrémité 19 du deuxième élément mécanique 3.

Ils poussent sur le fond de la chambre 18 de façon à écarter la tête 41 du deuxième élément mécanique 3, ce qui a pour effet d'assurer le dessertissage de la coiffe 23.

Lorsque la coiffe n'assure plus le maintien radial des mâchoires dans la gorge 16, l'effort de traction suivant la direction F3 provoque l'éjection des mâchoires en raison de la coopération des profils coniques de la gorge et des mâchoires.

A titre de variante il est bien entendu possible de réaliser une gorge délimitée par des portées coniques sur les mâchoires. Cette gorge coopérera avec un bourrelet complémentaire qui sera réalisé au niveau de l'extrémité du deuxième élément mécanique 3.

Il est bien entendu également possible de prévoir un nombre de mâchoires supérieur à deux.

Il est bien entendu possible de réaliser un dispositif liant une tige 3 et une plaque 2 en mettant en oeuvre un dispositif dans lequel les mâchoires 20a, 20b sont remplacées, comme dans l'exemple selon la figure 1, par un manchon 11 percé et recevant des billes.

Il est également possible de donner aux profils complémentaires gorges/mâchoires des formes différentes, par exemple des dentures ou encore un profil de filetage. Une telle dernière variante permettra de faciliter le montage du dispositif sur l'extrémité de l'arbre puisque le dispositif se fixera alors tout simplement par vissage, des méplats appropriés seront aménagés sur la surface externe du dispositif pour permettre son serrage sur les éléments mécaniques à lier. Le dispositif constituera alors véritablement un « boulon » pyrotechnique.

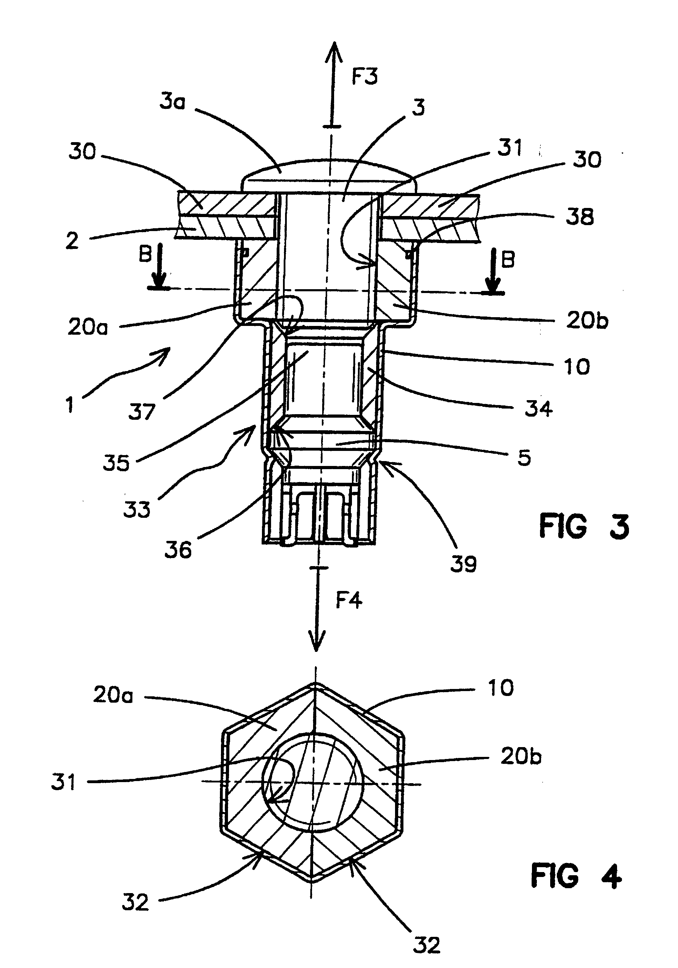

La figure 3 montre un tel autre mode de réalisation d'un dispositif de liaison déverrouillable pyrotechniquement.

Suivant ce mode de réalisation on assure à l'aide d'un boulon pyrotechnique la liaison mécanique entre deux plaques 2 et 30. Le premier élément mécanique est la plaque 2 sur laquelle vient en appui l'écrou pyrotechnique 1 et le deuxième élément mécanique est une vis 3 qui s'engage dans l'écrou 1 et qui comporte une tête 3a qui est appliquée par le vissage contre la plaque 30.

L'écrou 1 comprend deux mâchoires 20a, 20b qui comportent un profil interne taraudé 31 qui est destiné à coopérer avec le filetage de la vis 3. Chaque mâchoire a un profil externe comportant trois plats 32 d'égales longueurs, l'assemblage des deux mâchoires 20a,20b forme ainsi un écrou à profil hexagonal classique.

Les mâchoires ou demi écrous 20a,20b sont maintenus en contact l'un avec l'autre par une coiffe 10 réalisée par exemple en tôle emboutie.

La coiffe 10 a un profil hexagonal complémentaire de celui des mâchoires 20a,20b, les dimensions de la coiffe seront choisies de façon à assurer un assemblage légèrement serré avec les mâchoires.

La coiffe est prolongée par une partie cylindrique 33 qui délimite un logement cylindrique pour le composant pyrotechnique 5, ce dernier est maintenu axialement par un sertissage 39 de la coiffe.

Une bague entretoise 34 est disposée dans le logement délimité par la partie cylindrique 33. Cette bague 34 entoure une extrémité avant 35 du composant pyrotechnique 5 et elle est plus longue que ladite extrémité avant. Elle est en appui d'une part sur les mâchoires 20a,20b et d'autre part sur le composant pyrotechnique 5.

Elle comporte une première portée conique 36 qui est en appui sur un bourrelet du composant pyrotechnique 5 et une deuxième portée conique 37 qui forme une surface de butée destinée à empêcher tout contact de l'extrémité filetée de la vis 3 avec le composant pyrotechnique 5.

On évite ainsi la détérioration du composant pyrotechnique 5 qui pourrait résulter de l'assemblage de l'écrou 1 avec une vis 3 trop longue.

Afin de faciliter l'assemblage de l'écrou 1, les mâchoires 20a, 20b sont maintenues en contact l'une avec l'autre par un anneau déformable 38.

Cet anneau sera par exemple un anneau d'une matière plastique tel un polyamide ou encore du caoutchouc.

Le choix du caoutchouc permet également de compléter l'étanchéité du montage vis à vis des gaz engendrés par le composant pyrotechnique.

L'écrou pyrotechnique selon l'invention peut être utilisé de la même façon qu'un écrou classique.

On pourrait également assurer avec un tel écrou la solidarisation d'une tige, par exemple vissée ou sertie sur la partie arrière cylindrique 33 de la coiffe 10, avec une plaque maintenue appliquée sur l'écrou à l'aide d'une vis.

La vis 3 est ici une vis standard aux dimensions choisies en fonction de celles de l'écrou.

La vis pourrait bien entendue être remplacée par une partie filetée solidaire d'un deuxième élément à solidariser avec le premier élément à l'aide de l'écrou.

Le profil hexagonal de la coiffe 10 permet l'emploi d'un outillage classique (clés plates ou clés à tube).

Lors du serrage, un effort de traction est exercé par la vis 3 sur les mâchoires 20a, 20b suivant la direction F3. Le profil des filetages a pour effet d'écarter légèrement les mâchoires 20a,20b l'une de l'autre et de la vis 3. Les mâchoires sont néanmoins maintenues par la coiffe 10. Il en résulte un accroissement de l'effort de contact entre la coiffe et les mâchoires, ce qui assure le blocage de l'écrou et le maintien axial de la coiffe.

Lors de l'initiation du composant pyrotechnique 5, les gaz engendrés exercent une pression sur l'extrémité de la vis 3 ainsi que sur la coiffe 10 par l'intermédiaire du sertissage 39.

La coiffe 10 est éjectée suivant la direction F4 et elle n'assure plus le maintien radial des mâchoires 20a,20b de l'écrou 1. Les mâchoires s'écartent de la vis et la liaison vis/écrou se trouve supprimée.

Diverses variantes sont possibles sans sortir du cadre de l'invention.

Ainsi il est possible de varier le nombre des mâchoires et leur forme externe.

On peut par exemple réaliser des mâchoires dont l'assemblage permet de réaliser un écrou a profil carré. On peut également réaliser des mâchoires à profil externe cylindrique, on prévoira alors néanmoins au moins deux méplats sur le profil externe des mâchoires et de la coiffe afin de permettre le serrage.

## Revendications

1. Dispositif de liaison mécanique déverrouillable pyrotechniquement entre deux éléments mécaniques susceptibles d'être soumis à des efforts de traction et/ou de compression suivant un axe, dispositif comprenant au moins un composant pyrotechnique et au moins un moyen de verrouillage assurant la liaison entre les deux éléments mécaniques suivant au moins un axe, moyen de verrouillage susceptible d'être libéré lorsque les éléments mécaniques sont soumis aux efforts de traction et/ou de compression suivant ledit axe et qui est maintenu dans sa position de verrouillage par des moyens de maintien qui sont libérés par la pression des gaz engendrés par l'initiation du composant pyrotechnique, les moyens de maintien comprenant une coiffe (10,23) solidaire d'une tête (41) portant le composant pyrotechnique (5) ou bien formant elle-même une tête portant le composant pyrotechnique (5), **caractérisé en ce qu'**il comporte une chambre (18) dans laquelle se développent les gaz engendrés par le composant pyrotechnique (5), chambre délimités d'un côté par un fond d'un alésage (12) de la tète (41) et de l'autre côté par une extrémité (19) du deuxième élément mécanique (3).

2. Dispositif de liaison mécanique déverrouillable selon la revendication 1, **caractérisé en ce que** les moyens de verrouillage sont constitués par au moins deux billes (15) qui se logent dans des trous (14) aménagés sur un manchon tubulaire (11) solidaire du premier (2) des deux éléments mécaniques et qui coopèrent avec une gorge (16) qui est solidaire du deuxième élément mécanique (3), billes maintenues en place par la coiffe (10) qui est susceptible de se déplacer de façon à libérer les billes comme suite à la pression des gaz engendrés par le composant pyrotechnique (5).

3. Dispositif de liaison mécanique déverrouillable selon la revendication 2, **caractérisé en ce que** la coiffe (10) est maintenue axialement par rapport au manchon tubulaire (11) par un sertissage annulaire (13) d'une extrémité de celle ci sur le manchon.

4. Dispositif de liaison mécanique déverrouillable selon la revendication 1, **caractérisé en ce que** les moyens de verrouillage sont constitués par au moins deux mâchoires (20a,20b) en appui sur le premier élément mécanique (2) et enserrant une extrémité du deuxième élément mécanique (3), mâchoires présentant un profil complémentaire (21,22) de celui de ladite extrémité et maintenues en place par l'intermédiaire de la coiffe (23).

5. Dispositif de liaison mécanique déverrouillable selon la revendication 4, **caractérisé en ce que** la coiffe (23) est maintenue axialement par un sertissage annulaire (26) d'une extrémité de celle ci sur les mâchoires.

6. Dispositif de liaison mécanique déverrouillable selon une des revendications 4 ou 5, **caractérisé en ce que** le profil des mâchoires (20a,20b) est un profil de taraudage (31) destiné à coopérer avec une extrémité filetée (3) solidaire du deuxième élément mécanique.

7. Dispositif de liaison mécanique déverrouillable selon la revendication 6, **caractérisé en ce que** les mâchoires (20a,20b) sont maintenues avant fixation de la coiffe (10) par un anneau déformable (38).

8. Dispositif de liaison mécanique déverrouillable selon une des revendications 6 ou 7, **caractérisé en ce que** chaque mâchoire (20a,20b) présente un profil externe comportant au moins un plat (32), les mâchoires assemblées formant un écrou.

9. Dispositif de liaison mécanique déverrouillable selon la revendication 8, **caractérisé en ce qu'**il comporte une bague entretoise (34) entourant une extrémité (35) du composant pyrotechnique (5) et comportant une surface de butée (37) pour l'extrémité filetée (3) solidaire du deuxième élément mécanique de façon à éviter tout contact de cette dernière avec le composant pyrotechnique (5).

## Claims

1. A pyrotechnically unlockable mechanical linking device between two mechanical elements to be subjected to tensile and/or compressive force along an axis, said device comprising at least one pyrotechnic component and at least one locking means linking the two mechanical elements along at least one axis, said locking means able to be released when the mechanical elements are subjected to tensile and/or compressive forces along said axis and that is held in its locking position by retention means that are released by the pressure of gases generated by igniting the pyrotechnic component, the retention means comprising a cap (10, 23) integral with a head (41) carrying the pyrotechnic component (5) or else forming a head in itself carrying the pyrotechnic component (5), **characterized in that** it incorporates a chamber (18) in which the gases generated by the pyrotechnic composition (5) develop, said chamber delimited on one a side by a bottom of a bore (12) in the head (41) and on the other by one end (19) of the second mechanical element (3).

2. A pyrotechnically unlockable mechanical linking device according to Claim 1, **characterized in that** the locking means are constituted by at least two balls (15) housed in holes (14) arranged in a tubular sleeve (11) integral with the first (2) of the two mechanical elements and that co-operate with a groove (16) integral with the second mechanical element (3), said balls being held in place by the cap (10) that is able to move so as to release the balls further to the pressure of the gases generated by the pyrotechnic component (5).

3. A pyrotechnically unlockable mechanical linking device according to Claim 3, **characterized in that** the cap (10) is held axially with respect to the tubular sleeve (11) by annular crimping (13) of one of its ends onto the sleeve.

4. A pyrotechnically unlockable mechanical linking device according to Claim 1, **characterized in that** the locking means are constituted by at least two jaws (20a, 20b) pressing on the first mechanical element (2) and gripping one end of the second mechanical element (3), said jaws having a profile (21, 22) matching that of said end and held in place by the cap (23).

5. A pyrotechnically unlockable mechanical linking device according to Claim 4, **characterized in that** the cap (23) is held axially by annular crimping (26) of one of its ends onto the jaws.

6. A pyrotechnically unlockable mechanical linking device according to one of Claims 4 or 5, **characterized in that** the jaw (20a, 20b) profile is a tapping profile (31) intended to co-operate with a threaded end (3) integral with the second mechanical element.

7. A pyrotechnically unlockable mechanical linking device according to Claim 6, **characterized in that** the jaws (20a, 20b) are held by a flexible ring (38) before the cap (10) is attached.

8. A pyrotechnically unlockable mechanical linking device according to one of Claims 6 or 7, **characterized in that** each jaw (20a, 20b) has an external profile incorporating at least one flat part (32), the assembled jaws forming a nut.

9. A pyrotechnically unlockable mechanical linking device according to Claim 8, **characterized in that** it incorporates a spacer ring (34) surrounding an end (35) of the pyrotechnic component (5) and incorporating an abutment surface (37) for the threaded end (3) integral with the second mechanical element so as to avoid any contact of the latter with the pyrotechnic component (5).

## Patentansprüche

1. Mechanische, pyrotechnisch entriegelbare Verbindungsvorrichtung zwischen zwei mechanischen Elementen, die dazu geeignet sind, Zug- und/oder Druckbelastungen gemäß einer Achse unterworfen zu werden, wobei die Vorrichtung wenigstens ein pyrotechnisches Bauteil und wenigstens ein Verriegelungsmittel umfasst, welches die Verbindung zwischen den zwei mechanischen Elementen gemäß wenigstens einer Achse gewährleistet, wobei das Verriegelungsmittel dazu geeignet ist, freigesetzt zu werden, wenn die mechanischen Elemente den Zug- und/oder Druckbelastungen gemäß der genannten Achse unterworfen werden, und es in seiner Verriegelungsposition durch Haltemittel gehalten wird, welche durch den Druck der durch die Initiierung des pyrotechnischen Bauteiles erzeugten Gase freigesetzt werden, wobei die Haltemittel eine Krone (10, 23) umfassen, die fest mit einem das pyrotechnische Bauteil (5) tragenden Kopf (41) verbunden ist oder auch selbst einen das pyrotechnische Bauteil (5) tragenden Kopf bildet, **dadurch gekennzeichnet, dass** sie eine Kammer (18) aufweist, in der sich die durch das pyrotechnische Bauteil (5) erzeugten Gase entwickeln, wobei die Kammer auf einer Seite durch den Boden einer Bohrung (12) des Kopfes (41) und auf der anderen Seite durch ein Ende (19) des zweiten Elementes (3) begrenzt wird.

2. Mechanische, pyrotechnisch entriegelbare Verbindungsvorrichtung nach Anspruch 1, **dadurch gekennzeichnet, dass** die Verriegelungsmittel aus wenigstens zwei Kugeln (15) gebildet werden, die sich in auf einer rohrförmigen, fest mit dem ersten (2) der zwei mechanischen Elemente verbundenen Muffe (11) angeordnete Löcher (14) einfügen, die mit einer Auskehlung (16) zusammenwirken, welche einstückig mit dem zweiten mechanischen Element (3) ausgebildet ist, wobei die Kugeln durch die Krone (10) in Position gehalten werden, die dazu geeignet ist, sich so zu verschieben, um die Kugeln als Folge von dem durch das pyrotechnische Bauteil (5) erzeugten Gasdruck freizugeben.

3. Mechanische, pyrotechnisch entriegelbare Verbindungsvorrichtung nach Anspruch 2, **dadurch gekennzeichnet, dass** die Krone (10) axial in Bezug auf die rohrförmige Muffe (11) durch eine ringförmige Bördelverbindung (13) ihres einen Endes an der Muffe gehalten wird.

4. Mechanische, pyrotechnisch entriegelbare Verbindungsvorrichtung nach Anspruch 1, **dadurch gekennzeichnet, dass** die Verriegelungsmittel durch wenigstens zwei Backen (20a, 20b) gebildet werden, die sich am ersten mechanischen Element (2) abstützen und ein Ende des zweiten mechanischen Elementes (3) umschließen, wobei die Backen ein komplementäres Profil (21, 22) zu dem des genannten Endes aufweisen und mit Hilfe der Krone (23) in Position gehalten werden.

5. Mechanische pyrotechnisch entriegelbare Verbindungsvorrichtung nach Anspruch 4, **dadurch gekennzeichnet, dass** die Krone (23) axial durch eine ringförmige Bördelverbindung (26) ihres einen Endes an den Backen gehalten wird.

6. Mechanische pyrotechnisch entriegelbare Verbindungsvorrichtung nach einem der Ansprüche 4 oder 5, **dadurch gekennzeichnet, dass** das Profil der Backen (20a, 20b) ein Innengewinde-Profil (31) ist, das dafür vorgesehen ist, mit einem einstückig mit dem zweiten mechanischen Element ausgebildeten Einschraubzapfen (3) zusammen zu wirken.

7. Mechanische pyrotechnisch entriegelbare Verbindungsvorrichtung nach Anspruch 6, **dadurch gekennzeichnet, dass** die Backen (20a, 20b) vor der Befestigung der Krone (10) durch einen verformbaren Ring (38) gehalten werden.

8. Mechanische pyrotechnisch entriegelbare Verbindungsvorrichtung nach einem der Ansprüche 6 oder 7, **dadurch gekennzeichnet, dass** jede Backe (20a, 20b) ein äußeres Profil aufweist, das wenigstens eine Fläche (32) umfasst, wobei die zusammengesetzten Backen eine Mutter bilden.

9. Mechanische pyrotechnisch entriegelbare Verbindungsvorrichtung nach Anspruch 8, **dadurch gekennzeichnet, dass** sie einen Abstandshülsen-Ring (34) umfasst, der ein Ende (35) des pyrotechnischen Bauteiles (5) umgibt und eine Anschlagfläche (37) für den einstückig mit dem zweiten Element ausgebildeten Einschraubzapfen (3) derart umfasst, dass jeder Kontakt dieses Letzteren mit dem pyrotechnischen Bauteil (5) vermieden wird.
